# EUROPEAN PATENT APPLICATION

(11) **EP 3 107 050 A1**
(43) Date of publication of application: **21.12.2016**
(21) Application number: 16174504.7
(22) Date of filing: 15.06.2016
(51) Int. Cl.: G06Q 10/10, G06F 17/30

(54) **SYSTEM FOR DATA AGGREGATION AND REPORT GENERATION**

(30) Priority: 15.06.2015 US 201514739555
(71) Applicant: SAP SE, 69190 Walldorf (DE)
(72) Inventor: GOLEC, Adrian, 69190 Walldorf (DE); HAMMANN, Fabian, 69190 Walldorf (DE); LANG, Georg, 69190 Walldorf (DE)
(74) Representative: Richardt Patentanwälte PartG mbB

(57) **Abstract**

In some embodiments, a system for aggregating data stored in database tables may include a generator configured to generate a database view or a stored procedure for aggregating data stored in one or more database tables by replacing placeholders contained in one or more templates with dynamically determined names of the one or more database tables. The code structure of the table is free of a reference to a database name of at least one the one or more database tables whose data is to be aggregated in the report. The generation module is configured to store an SQL report command created as a result of the placeholder replacement in the database in the form of a view or a stored procedure.

## Description

### Field of the invention

The invention relates to database management systems, and more particularly to the use of database management systems for data aggregation.

### BACKGROUND

Often, customers of a database management system want to perform reporting on the underlying data contained in the database management system. For instance, a customer may want to create a day-end report on how many parcels were handled by each logistics depot in a certain area or the number of goods produced by a particular machine or manufacturing line per day, week or month. Also, in some examples, a customer may want to create a report to calculate the amount of items consumed by a machine for producing a good or the number of phone connections provided by mobile communications providers in a given time interval.

However, in these types of systems, the level of aggregation may be relatively high (e.g., combining many tables in many different manners), and the available dimensions may be relatively low. Also, in some examples, the database management system may be large (e.g., storing millions of transactions in its database tables).

Some conventional approaches suggest importing the transactional data into a business warehouse and then setting up defined queries. However, this approach and other similar approaches require a relatively large amount of resources in terms of memory and hardware resources for replicating the data and for maintaining a duplicate of the data elsewhere. Furthermore, the fact that customers can make many different types of customizations to the database tables can make reporting on transactional data relatively difficult.

### SUMMARY

It is an objective of the present invention to provide for an improved data aggregation and reporting system, method and computer program product as specified in the independent claims. Embodiments of the invention are given in the dependent claims. Embodiments of the present invention can be freely combined with each other if they are not mutually exclusive.

In one computer-implemented method for aggregating data stored in a database for generating a report. The method comprises:
- providing a framework for the database, the framework being program logic implementing a generator configured for creating one or more SQL report commands, the framework comprising one or more templates, each template being a code structure describing a manner in which one or more of the SQL report commands are to be created, the code structure comprising table name placeholders and being free of any reference to the name of at least one of one or more database tables comprising data to be aggregated by the report;
- determining, by the framework, that the report is to be created for the one or more tables including the at least one table;
- in response to the determination, identifying, by the framework, the name of the at least one table and optionally also the names of the other ones of the one or more tables for which the report is to be created;
- selecting, by the framework, one or more of the templates;
- transforming, by the framework, the one or more selected templates into one or more of the SQL report commands by parsing the selected templates and filling the place holders of the selected templates with the identified table names; and
- storing, by the framework, the one or more SQL report commands in the form of a database view or stored procedure in the database;
- receiving, by a DBMS maintaining the database, a call of the view or the stored procedure; and
- in response to receiving the call, executing the SQL report command stored as the called view or called stored procedure for generating the report.

Said features may be advantageous as they provide a method for quickly generating reports that aggregate data over a plurality of tables that is robust against structural changes of the database tables, e.g. modifications of the table names and column names and the number of columns in a table. Thus, a highly flexible, lightweight reporting method is provided allowing the user of the database to create one or more reports without having to know or get acquainted with the particularities of how to aggregate data stored in multiple database tables. The templates which specify the data aggregation logic are provided as part of the framework. Thus, the end-user or administrator of the database acting as data source does not have to implement the report generating SQL commands himself and rather can rely on the templates provided by the framework vendor, e.g. SAP or other companies offering data aggregation solutions in the big data domain. Nevertheless, the operator of the database is allowed to modify the names of the tables, add tables whose data shall be taken as input for report generation. As the SQL report command is generated from the template at runtime by replacing placeholders with respective table names, the method can flexibly adapt to the actual table names and structures of the database that may deviate from an original or default set of database tables used by the vendor of the framework for creating the templates.

Thus, in one beneficial aspect, it is not necessary any more to extract transactional data from a transactional source database, e.g. an OLTP database, and to transfer the extracted data into a business warehouse ("BW"). Thus, it is not necessary any more to generate and maintain a duplication of the source database, thereby reducing network traffic and reducing the CPU consumption. Moreover, it is not necessary by the owner of the BW to implement SQL report queries that are speed-optimized for the type of DBMS used for the BW. In addition, in particular for large databases, it may take days until the data is available in BW, thus any report generated from the data in the BW will never show "Realtime" values.

In a further beneficial aspect, it is not necessary any more to implement an application-layer data aggregation workflow for generating one or more reports. Rather, the templates are used for creating SQL reporting commands that are respectively persisted in the form of one or more views or one or more stored procedures (SPs) in the database, thereby avoiding data traffic between the database layer and the application layer and increasing the speed of data aggregation because SQL commands operating on data that is stored in a structured manner in a database table can be processed much faster than data object instances created in the application layer.

Embodiments of the invention may allow to flexibly generate reports for database tables with customized names and/or table structures. The report may aggregate data contained in several hundred million transactional data records per day (e.g. call detail records for telecommunication providers, download statistics and page views of a page of a web shop, statistics on cloud service usage, etc.). By providing the framework that acts as an abstraction layer above the database tables the access to the data in the table for querying and reporting purposes is facilitated. For example, the database may be a HANA database which is an in-memory database configured for highly efficiently performing data aggregation tasks.

For example, the templates may comprise DDL commands which are replaced or supplemented in a first step with SQL statements comprising placeholders, the placeholders in the SQL statements being replaced in a second step with names of one or more data sources. Alternatively, the template comprises one or more SQL statements with placeholders instead of table names, whereby the SQL data aggregation command is generated by replacing the placeholders of the template with the dynamically determined, real names of the data sources such that the resulting SQL report command accesses said data sources.

According to some embodiments, the generator and the templates are configured such that the SLQ report command generated by the generator based on the template utilizes parallelization and aggregation capabilities of HANA. For example, HANA-optimized templates may be configured to generate SQL report commands in the form of Hana CDS ("Core Data Service")-views. A Hana CDS view is a design-time file in the Hana repository that can be processed very efficiently.

According to embodiments, the generated views and/or generated stored procedures have assigned a group-ID or user-ID being indicative of the user or user group allowed to call the view and to receive the data aggregated by the view or stored procedure. The views and stored procedures are configured to selectively aggregate only over a subset of the data contained in the tables of a database for which the user having called the view or stored procedure has sufficient access rights. Consequently, a view or stored procedures can be used for limiting the degree of exposure of the underlying tables to the outer world: a given user may have permission to query the view, while denied access to the rest of the base table.

A "view" as used herein is a stored query command which the database users can query just as they would in a persistent database collection object. This pre-established query command is typically kept in the database dictionary. Unlike ordinary base tables in a relational database, a view is a virtual table computed or collated dynamically from data in the database when access to that view is requested. Changes applied to the data in a relevant underlying table are reflected in the data shown in subsequent invocations of the view.

A "stored procedure" as used herein is a set of Structured Query Language (SQL) statements with an assigned name that's stored in the database in compiled form so that it can be shared by a number of programs.

The term "data aggregation" as used herein is the compiling of information from one or more data sources, e.g. one or more tables, with intent to prepare combined datasets for data processing. For example, a data aggregation operation can be the computation of a count, an average, a max, a min, a median of an attribute value of a plurality of data records.

According to embodiments, the framework stores and/or structurally modifies one or more of the tables comprising data to be aggregated by the report. The storing and/or modification can be performed after the framework and the templates were provided. The selected templates are free of a reference to at least one of or all of the names and/or structural modifications of the one or more tables. The identification of the names of the one or more tables for which the report is to be created is performed in response to the storing or structurally modification of the at least one table.

This may be advantageous as upon any modification of an existing table structure or upon supplementing the database with a new table comprising data to be aggregated for the report, the automated generation of a view or stored procedure to access and aggregate the data contained herein is created. Contrary to the tables and columns of the database, the view or stored procedure may have a predefined name, the generated views or stored procedures thus providing an abstraction layer with an interface whose callable routine names is comparatively constant and robust against changes in the names of the tables.

According to embodiments, the provision of the framework for the database may comprise deploying the framework and instantiating the framework to enable the framework to interoperate with the DBMS maintaining the database. For example, the framework may be implemented as an abstraction layer comprising a graphical user interface that allows a user to inspect the names and structure of the tables currently stored in the database, to add, modify or remove tables to or from the database. The modification may comprise modifying the content and/or the structures of the tables, e.g. renaming the table or column names, adding additional columns or tables to the database and the like. Optionally, the GUI may comprise selectable elements allowing a user to specify whether or not a particular table comprises data that potentially is to be aggregated for generating one or more reports. For example, a user may use the GUI for creating 10 tables in the database and set a selectable GUI element for 6 out of said 10 tables to "selected" state to indicate that the framework should transform the templates associated with any one of the 6 selected tables into an SQL report command configured to read data from said 6 tables. For example, a check box, drop down menu, radio button group or the like may be used for enabling the user to select or deselect the table he or she considers as likely or at least potentially data source for generating the report.

The deployment can be performed via a network connection, via an USB-stick, via an installation DVD or CD-ROM.

As a result of providing the framework, the framework is able to interoperate with the DBMS maintaining the tables and to access the tables in the database.

For example, the provision of the framework may comprise instantiating the framework. The instantiation of the framework can comprise instantiating and displaying a GUI that allows users of the DBMS to select and modify tables in the database and to select the ones of the table that might potentially act as data sources for generating one or more reports. The framework can evaluate the user's selection and can automatically identify one or more templates which are transformable into an SQL report command that aggregates data contained in one or more of said user selected tables and optionally further tables. For example, the templates can be stored in association with table identifiers, with table name prefixes, infixes, suffixes or other table name or column name patterns which can be compared and matched with the names of the real tables and columns in the database. The selection of a template from the plurality of templates of the framework that is able to generate a report from the selected table can comprise evaluating the names and/or metadata of the tables of the database and evaluating prefix, infix, suffix or other name-related patterns or metadata stored in a association with the templates for identifying one or more templates of the framework whose table name-related patterns matches with the names or metadata of the real tables. The automatically identified templates are then selected and processed for transforming the selected templates into SQL report commands. This may be advantageous as a pattern-based template selection and SQL report command generation is provided. This approach allows the user to modify the names of the tables at least to a certain extent that does not result in a mismatch of with the name-related pattern stored in association with the template to be used for the report.

According to some alternative embodiments, the framework automatically transforms each of the templates contained in the framework for each of the database table marked by the user as a potential data source for a report into a respective SQL report command. Thus, for n templates and m tables marked as report data sources, n x m SQL report commands are automatically generated and stored in the database in the form of one or more views or stored procedures. This may be advantageous in particular for small databases and a limited set of templates and corresponding report types (e.g. for a report type and corresponding template for computing a sum of all numerical values of a table, a report type fro computing an average of all numerical values in a table, or the like).

According to some alternative embodiments, the GUI of the framework comprises further GUI elements allowing a user to manually select one or more of the templates contained in the framework which are to be transformed into the SQL report commands. Thus, the GUI enables the user to select the type of report to be generated and the type of data source without forcing the user to maintain a particular naming convention for the database tables acting as data source for the report and without requiring the user to implement the data aggregation routines in the database or in an application layer.

Thus, the determination of the tables to be used as data basis for a report and/or the selection of the template that is to be transformed into an SQL report command may be performed automatically, semi-automatically and/or by providing a GUI that enables a user to select the tables and/or the templates. Thus, a very flexible, user-friendly reporting system may be provided that is robust against a modification of the table names and that can easily be functionally expanded by the integration of further templates in the framework.

According to embodiments, the one or more templates comprise a first template and a second template. The generation module comprises a first generator module and a second generator module. The first generator module is configured to selectively transform the first template into one or more first ones of the SQL report commands. The second generator module is configured to selectively transform the second template into one or more second ones of the SQL report commands.

Using different program modules for transforming different templates may be advantageous as a greater complexity of the routines for parsing the code structure and for inserting table names in the placeholders can be achieved and implemented in the respective modules.

According to embodiments, the first generator module is configured to selectively transform each of a plurality of first templates into one or more SQL report commands of a first type. The second generator module is configured to selectively transform each of a plurality of second templates respectively into one or more SQL commands of a second type. The first and second type SQL report commands differ from each other.

Fore example, the first and second type of SQL report commands respectively are selected from a group of SQL report command types comprising:
- a UNION statement configured to combine data stored in a plurality of tables;
- an INTERSECT statement configured to identify an intersection of the data of a plurality of tables;
- a SELECT FROM statement configured for retrieving data from a plurality of database tables respectively matching a SELECT criterion;
- a JOIN statement configured to combine data stored in a plurality of tables using a JOIN criterion.
- an SQL aggregation function configured for aggregating data stored in one or more database tables respectively represented by placeholders.

For example, a first type of templates may generate first types of SQL report command which comprise a UNION statement for combining data stored in a column "item-output" column that is part of many different tables, e.g. a table MA for machines of production line A, a table MB for machines of production line B, and the like. A second type of templates may generate second types of SQL report command which comprise an INTERSECT statement for identifying machine types for which data records exist both in the table MA and in the table MB, thereby identifying machines used in both production lines A, B.

According to embodiments, the selection of the one or more templates comprises receiving, by the framework, a user's selection of the one or more templates via a GUI of the framework. The user-selected templates are used by the framework for being transformed into the SQL report command.

According to alternative embodiments, the selection of the one or more templates comprises receiving, by the framework, a request for generating the report. The request comprises an indication of the type of report to be generated. In response to receiving the request, the framework automatically evaluates a report type-ID stored in association with each of the templates and selects the ones of the templates having assigned a report type-ID that corresponds to the type of the report indicated in the request.

According to a still alternative embodiment, the framework evaluates a configuration file or environmental parameters for dynamically identifying the type of report to be generated and for selecting the ones of the templates having assigned a report type-ID that corresponds to the type of the report to be generated. The selected templates will be transformed into one or more respective SQL report commands by replacing the placeholders with the table names of one or more of the tables selected by the framework or by a user as a data basis for generating the report.

For example, the generation of the SQL report commands can be performed immediately after the framework was provided and the selection of the templates was performed. The views or stored procedures in the database that comprise the generated SQL report commands are re-used multiple times whenever a client application calls one of the stored procedures or views for receiving a report. Upon supplementing the framework with further templates and/or upon modifying the structure of one or more of the tables in the database or adding, removing or renaming tables in the database, the process of transforming the additional and/or existing templates into SQL report command may be repeated. Thereby, the SQL report command based views or stored procedures in the database are replaced by or supplemented with updated or additional views or stored procedures generated as described for embodiments above using the additional or updated templates or table names.

According to embodiments, the framework is a program logic configured for providing a user interface for enabling a user to specify table names and column names and for specifying the structure of tables to be created in the database. Moreover, the program logic enables the user to select the ones of said tables whose data is to be aggregated in the report or in any other type of report supported by the framework. Thus, a GUI is provided that allows a user to specify or modify the structure of the tables in the database and at the same time - with the same GUI - to specify which ones of the tables should be as data basis for generating a report. This framework may allow to dynamically create an abstraction layer in the form of one or more views or stored procedures for requesting reports by multiple different client application, e.g. via a network, without requiring a programmer or database specialist to manually adapt the table names in a way that predefined data analysis and aggregation logic implemented in modules of the framework and/or in templates contained in the framework are able to read data from said tables. Optionally, the GUI of the framework comprises GUI elements allowing a user to select one or more of the templates to be transformed into an SQL report command by replacing placeholders in the selected templates by dynamically determined table names and/or column names of the tables selected via the GUI.

According to embodiments, at design time of the framework, the framework is supplemented with the templates. The plurality of templates comprises the one or more selected templates. The templates are code structures describing the creation of SQL report commands of different report types. Typically, the framework and the templates are provided and defined by the same organization, e.g. a vendor of the framework having some knowledge of the data aggregation and reporting requirements of a customer to which the framework and the templates shall be delivered. The vendor of the framework may also have some rough knowledge of the data and the set of tables of the database for which the framework is provided, but does not know at the time of providing the framework the exact names of the tables and table columns of the database for which the framework is provided or at least does not implement in the framework any mechanism that prevents the customer from renaming or structurally modifying and supplementing the tables. Nevertheless, the combination of the generator and the templates in the framework ensures that a plurality of different report types can be computed quickly.

According to embodiments, the framework receives, after the provision of the framework and at runtime of the database system, a request for generating the report of a specified report type. The specified report type is one of a plurality of report types whose underlying SQL report commands were generated by transforming the templates of the framework. In addition, the framework selects (automatically or in accordance with user input data provided via a GUI or a configuration file) the ones of the templates whose code structure describes the creation of an SQL report command for generating a report of a report type that corresponds to the specified report type.

According to embodiments, the selected template and optionally also one or more of the other templates of the framework are configured for creating and storing a tree-based hierarchy of SQL report commands in the form of a tree-based hierarchy of views or in the form of a tree-based hierarchy of stored procedures. Each view or stored procedure represents a node of the tree and represents a respective report, wherein upon calling any one of the nodes, the called node calls all its direct child nodes (i.e., the view or stored procedure represented by said called node) until the leaf nodes of the trees being direct or indirect child nodes of the initially called node have been called, thereby generating a report that aggregates data provided by and aggregated from all the called nodes being a direct or indirect child node of the initially called node. For example, it is possible that a single template comprises a code structure that, upon having filled the placeholders with table names, creates multiple, hierarchically organized and interconnected views or SPs. This may be advantageous as the hierarchy of SQL report commands which specify a data aggregation operation allows implementing very complex, multi-level data aggregation operations.

According to some embodiments, the creation of the tree-based hierarchy of nodes comprises:
a) replacing placeholders in a first portion of one of the templates by the identified table names for creating one or more first ones of the nodes of the hierarchy, the first nodes being part of a first level of the hierarchy, the first level being the lowest level of the hierarchy and comprising the leaf nodes; b) replacing placeholders in a second portion of one of the templates by the names of one or more of the created first nodes, the names of the created first nodes being view names or stored procedure names, for creating one or more second ones of the nodes of the hierarchy constituting a second level of the hierarchy; and c) repeating step b) for one or more further portions of the template, if any, thereby respectively replacing placeholders by the names of the nodes of a hierarchy having been generated in a previous iteration of step b), until the root node of the hierarchical tree is generated. Thereby, the names of one or more of the nodes of the second and any higher level of the hierarchy are hard coded in the template or in the program logic of the generator.

For example, the framework may parse a first part of a particular template and substitute table names in said first part with the dynamically identified table names for generating one or more first SQL report commands that are stored in the database in the form of one or more first views. (This and other examples are described for views, but stored procedures could be used as well). The framework continues to parse a second part of the particular template and substitute table names in said second part with the (known) names of the one or more first views generated while processing the first part of the particular template. The one or more first views represent the lowest hierarchical level (comprising the leaf nodes) of the tree-based hierarchy and the one or more second views represent the second lowest ("second") hierarchical level. Depending on the code structure of the particular template, the framework may continue to parse a third part of the particular template and substitute table names in said third part with the (known) names of the one or more second views. The one or more third views represent the "third" hierarchical level of the tree-based hierarchy. And so on until a root view is generated which, upon being called, generates a report that aggregates data over the whole hierarchy of views by calling nodes being a direct or indirect child node of the root view.

According to embodiments, each node of the hierarchy of nodes is configured to return, upon being called by a client application, a respective report that aggregates data provided by all direct or indirect child nodes of said called node to the client application.

According to embodiments, the framework comprises a further program logic for creating a hierarchy of SQL report commands. The one or more SQL report commands belong to said hierarchy. The transformation comprises transforming a plurality of the templates into a plurality of SQL report commands. The plurality of the SQL report commands belong to a first level of the hierarchy. The method comprises:
- analyzing, by the framework, the plurality of the SQL report commands of the first hierarchical level, for generating one or more SQL report commands belonging to a second level of the hierarchy; and
- analyzing, by the framework, a plurality of templates of the second or a higher hierarchical level for generating a root SQL report command representing a root node of the hierarchy of the SQL report commands; and
- storing, by the framework, the SQL report commands of any one of said hierarchical levels in the form of a respective database view or stored procedure in the database, wherein the root SQL report command and each of the SQL report commands of the second and any further hierarchical level d is configured to return, upon being called, a report that aggregates data by automatically calling the SQL report commands of the lower levels of the SQL report command hierarchy.

This may be advantageous as the generation of multiple, hierarchically views (or SPs) enables a client application to dynamically request reports on different hierarchical levels and different sub-sets of database tables of the hierarchy simply by calling different views within the hierarchy. Thus, a highly complex and flexible reporting method is provided which allows a client to request reports for different sub-sets of tables and for different levels of data aggregation. The root node may act as a single callable interface for generating a report that aggregates over all tables in the database marked as potential data basis for one or more reports.

According to embodiments, the one or more selected templates comprise at least one template whose code structure specifies the aggregation of data stored in a plurality of database tables whose table name prefixes, infixes and/or suffixes follow a predefined pattern. The selection of said template by the framework comprises determining that the prefixes, infixes and/or suffixes of the one or more tables for which the report is to be created match the predefined pattern in the code structure of the at least one template and selecting the determined template for performing the transformation. The transformation of the selected template into the one or more SQL report commands comprising generating an SQL report command that aggregates data stored in the plurality of database tables whose table name prefixes, infixes and/or suffixes follow the predefined pattern, the SQL report command comprising the full names of the tables instead of the placeholders, whereby the prefixes, infixes and/or suffixes are used for identifying the placeholders that are to be filled with the full names of the tables.

For example, the vendor of the framework may provide a set of tables to the operator of the database, the names of the set of tables ("standard tables") following a convention that raw data records of a particular data object class, e.g. "telecommunication connections" are stored in a table having a prefix "0BIT", raw data records to be excluded from data processing are stored in a table having a prefix "1BIT", processed data records (i.e., all 0BIT data records not being comprised in the 1 BIT table and having been checked (processed) for identifying semantic or syntactic inconsistencies) are stored in a table having a prefix "2BIT", processed data records that shall be excluded from reporting (e.g. for reasons related to data confidentiality, data quality, etc) are stored in a table having a prefix "3BIT" and data records ready for being reported (i.e., all 2BIT data records not being comprised in the 3BIT table) are stored in a table having the prefix "4BIT". The fraction of data records stored in the 1BIT table and/or 3BIT table is an indication of the quality of the data. The framework may comprise a template that computes the fraction of two or more of the above mentioned tables, e.g. the 2BIT/0BIT data record fraction, a 4BIT/2BIT data record fraction and/or a 4BIT/0BIT data record fraction to generate a report being indicative of the quality of the raw data and the "data loss" caused by quality problems. The template may comprise a placeholder that is replaced upon transformation of the template into the SQL report command only by the portion of the table name that does not constitute the prefix. For example, an SQL expression in the template could look like "SELECT COUNT * from 2BIT@tablenameportion@ [...]" for the complete table name. The prefix may be used for identifying the placeholder to be replaced by a table name. The generator parses the templates to assign table names and the placeholders to be replaced via matching prefixes.

According to some examples, the framework GUI comprises GUI elements enabling a user to select the data object class for which a report for the data quality of the data shall be generated from a list of data object classes whose data records are stored in a step-wise manner in five different tables with prefixes OBIT to 4BIT as described above. Thus, with a single template, the data quality of a plurality of different data objects ("telecommunication connections"; "employees", "machines of type I", "production line parameters" etc) can be aggregated and respective reports can be requested even for data objects and respective tables that did not exist at the moment of defining the templates and/or of providing the framework.

A further template may be used for generating a view or stored procedure for aggregating the results generated by two or more dynamically generated views or stored procedures. For example, the above mentioned template could generate a view whose name follows the pattern "dataqualityreport_@data_object_class@". The database could comprise three views "dataqualityreport_telecommunication_connections", "dataqualityreport_employees" and "dataqualityreport_machines_type_I". Each of said three views was dynamically created by transforming a single template by replacing placeholders with respective source table names. A further template or a portion at the end of the above template could an SQL expression with some placeholders, repeat start tags and repeat end tags that is transformed by the framework into a further view of a higher hierarchical level. Said further view (or stored procedure) that may also considered as "root node" of the hierarchy is configured to generate a report of the average data strategy of all data classes for which a "dataqualityreport_@data-object-class@" view was generated. Upon the root node view or SP being called, the root node view or SP calls each of the (here: three) dynamically generated "dataqualityreport_@data-object-class@" views (or SPs) to compute an average data quality measure that is returned as result to the client. The template used for creating the root node may use the view name prefix "dataqualityreport_" for identifying the views to be used as a data source and whose names are inserted into the placeholders of the further template upon transforming the further template into the "root view". A more detailed example on how repeat start tags and repeat end tags are used is given below. Instead of the UNION operator, any other appropriate SQL expression may be used, e.g. AVG for computing the average, SUM for summing up numbers, or the like for combining the SQL expression generated while looping through the dynamically determined name lists of the data sources (tables, table columns and/or views).

Thus, for each data object class for which a report shall be computed, (like car, machine, production line) five different tables are expected by the vendor of the framework to exist in the database although the exact table names are not known. For example, the vendor may expect that for the object type "machine" five tables exist but may not know whether the tables have the names "0BIT_machine_performance_records", "1BIT_machine_performance_records", "2BIT_machine_performance_records", "3BIT_machine_performance_records", and "4BIT_machine_performance_records" or "0BIT_apparatus_performance_records", "1BIT_apparatus_performance_records",..., and "4BIT_apparatus_performance_records" are used.

According to embodiments, the database is maintained by a first DBMS of a first DBMS type. The templates of the framework implement a plurality of different data aggregation operations and are configured to be transformed into SQL report commands that can be performed by the first DBMS type more efficiently than by a second DBMS type. The method further comprises: providing a further framework for a second database maintained by a second DBMS having a second DBMS type. The further framework is program logic implementing the same generator as the above described framework. The further framework comprises one or more further templates. Each further template is a code structure describing a manner in which one or more further SQL report commands are to be created. The further SQL report commands can be performed by the second DBMS type more efficiently than by the first DBMS type for enabling the second DBMS to generate a report by calling a view or stored procedure created by the second framework.

This may be advantageous as basically the same framework for flexibly generating reports for a plurality of database tables with unknown names being maintained by different types of DBMS can be reused. It is merely necessary to adapt the templates such that the SQL routines specified in the respective code sections are adapted to the type of DBMS used for maintaining the database comprising the tables. For example, some DBMS types interpret an SQL statement comprising a LIMIT and an ORDER BY clause such that at first the whole result set is sorted and then a sub-set defined by the limit clause is returned. Other DBMSs first determine a result set having a size as indicated by the LMIT clause and then perform the sorting on the result set. There also exist differences regarding the order of interpreting SQL clauses that have an impact on the performance. Embodiments of the invention allow to deploy the same framework to many different customers using different types of DBMSs whereby the framework is speed-optimized for the respective type of DBMS by using different sets of templates in the different frameworks, the different sets of frameworks being speed-optimized for the different DBMS types.

In a further aspect, the invention relates to a non-transitory computer-readable medium storing executable instructions that when executed by a processor cause the processor to perform a method according to any one of the embodiments described herein.

In a further aspect, the invention relates to a data processing system for generating a report that aggregates data stored in one or more tables of a database. The system comprises a framework. The framework is a program logic implementing a generator configured for creating one or more SQL report commands. The framework comprises one or more templates. Each template is a code structure describing a manner in which one or more of the SQL report commands are to be created. The code structure comprises table name placeholders and is free of any reference to the name of at least one of the one or more database tables comprising data to be aggregated in the report. In addition, the system comprises a DBMS for maintaining the database. The database comprises the one or more tables including the at least one table that has been stored in the database and/or has been structurally modified in the database after the framework was provided.

The framework is configured for:
- determining that the report is to be created for the one or more tables including the at least one table; for example, the framework can comprise a GUI enabling a user to select a GUI element to indicate that a particular table comprises data that should be aggregated when generating a report;
- in response to the determination, identifying the names of the at least one table and optionally also of the other one or more tables for which the report is to be created;
- selecting one or more of the templates;
- transforming the one or more selected templates into one or more of the SQL report commands by parsing the selected templates and filling the place holders of the selected templates with the identified names of the one or more tables; and
- storing the one or more SQL report commands in the form of one or more database views or stored procedures in the database.

The DBMS is configured for receiving a call of the view or the stored procedure, e.g. from one or more client applications which may be stored locally or remotely. In response to receiving the call, the DBMS executes the SQL report command stored as the called view or called stored procedure for generating the report. The report can then be returned to the calling client application. For example, the report can be returned as a result set or as a set of data objects wrapped in some message data objects created in accordance with the data exchange protocol used, e.g. SADL.

According to embodiments, the system comprises an interface for storing and/or structurally modifying at least one of the one or more tables which comprise data to be aggregated by the report. The storing and/or structural modification was performed after the framework and the templates were instantiated and after the framework started to interoperate with the database. In some examples, the framework is configured to trigger the transformation of the templates into the SQL report commands in response to determining that a new table to be used for storing data that is to be reported was stored in the database and/or in response to determining that an existing table comprising data that is to be reported was structurally modified. This may be advantageous as the abstraction layer provided by the automatically generated views is automatically adapted to structural changes in the underlying database.

According to embodiments, the templates in the framework lack any reference to a name of a table or table column in the database or at least lack a reference to customized tables (if the database comprises a mixture of customized and standard tables).

According to embodiments, the one or more tables of the database comprising at least one table whose structure is defined by a user of the DBMS and comprising at least one further table that is provided to the database together with the framework and whose structure is defined by a further user associated with the provider of the framework, the user and the further user belonging to different organizational units and/or belonging to different security domains.

According to embodiments, the framework comprises a plurality of generator modules. The different generator modules are configured for transforming one or more selected ones of the templates into SQL report commands of different report types. The framework comprises a mapping that assigns the templates to the generator modules in accordance with an n:m relationship. The assignment ensures that each generator module selectively parses the ones of the templates whose code structure can be parsed and interpreted by the assigned module for generating an SQL report command.

In some embodiments, a system for database view generation may include at least one processor, and a non-transitory computer-readable storage medium including instructions executable by the at least one processor. The instructions are configured to implement a view generator configured to generate a database view for one or more database tables. The view generator includes a generation module configured to determine a generation template for the database view, where the generation template is a code structure describing a manner in which the database view is created. The code structure does not reference a database name of the one or more database tables. The generation module is configured to invoke a code composer to insert code commands into the generation template to build a structured query language (SQL) statement for the database view, where the SQL statement references the database name of the one or more database tables. The view generator is configured to create the database view based on the SQL statement.

The system may include one or more of the following features (or any combination thereof). The generation template may include one or more variables in replace of the database name. The generation module may be configured to obtain the generation template from a database storing generation templates. The generation module may be configured to create the generation template. The generation module may be configured to create the generation template by modifying a data definition language (DDL) source to remove references to the database name and to insert a loop statement to process each database table required by the database view. The view generator may be configured to assign the generation module to the generation template. The generation module may be configured to insert generational information into the generation template. The one or more database tables may include a standard database table and a custom database table.

In some embodiments, a non-transitory computer-readable medium storing executable instructions that when executed cause at least one processor to determine that a plurality of database views are to be created, the plurality of database views including a first database view for first database tables and a second database view for second database tables, instantiate a first generation module configured to build the first database view using a first generation template, instantiate a second generation module configured to build the second database view using a second generation template, transform, by the first generation module, the first generation template into a structure query language (SQL) statement capable of providing the first database view, and transform, by the second generation module, the second generation template into an SQL statement capable of providing the second database view.

The non-transitory computer-readable medium may include one or more of the following features (or any combination thereof). The first generation module may be configured to process the first generation template but not the second generation template, and the second generation module is configured to process the second generation template but not the first generation template. The executable instructions may include instructions to invoke a code composer configured to build the first generation template by inserting code commands into the first generation template that reference database names of the first database tables. The executable instructions may include instructions to invoke a code composer configured to build the second generation template by inserting code commands into the second generation template that reference database names of the second database tables. The first generation template may be different than the second generation template, and the first generation template may include a union operation involving the first database tables. The first database tables may be different from the second database tables. The first and second database tables may include custom database tables. The first and second database tables may be part of an in-memory database system.

In some embodiments, a method for view generation includes determining that a plurality of database views are to be created, the plurality of database views including a first database view for first database tables and a second database view for second database tables, instantiating a first generation module configured to build the first database view using a first generation template, instantiating a second generation module configured to build the second database view using a second generation template, transforming, by the first generation module, the first generation template into a structure query language (SQL) statement capable of providing the first database view, and transforming, by the second generation module, the second generation template into an SQL statement capable of providing the second database view.

The method may include one or more of the following features (or any combination thereof). The first generation module may be configured to process only the first generation template, and the second generation module is configured to process only the second generation template. The method may include invoking a code composer configured to build the first generation template by inserting code commands into the first generation template that reference database names of the first database tables. The method may include invoking a code composer configured to build the second generation template by inserting code commands into the second generation template that reference database names of the second database tables.

The details of one or more implementations are set forth in the accompanying drawings and the description below. Other features will be apparent from the description and drawings, and from the claims.

### BRIEF DESCRIPTION OF THE DRAWINGS

FIG. 1 illustrates a system for view generation according to an implementation.
FIG. 2 illustrates a system for view generation according to another implementation.
FIG. 3 illustrates a sequence diagram depicting view generation operations performed by the system of FIG. 1 and/or the system of FIG. 2 according to an implementation.
FIG. 4 illustrates a flowchart depicting example operations of the system of FIG. 1 and/or the system of FIG. 2 according to an implementation.

### DETAILED DESCRIPTION

The systems and methods discussed herein provide a mechanism that generates database views or stored procedures for aggregating data from database tables using "generation templates" also referred herein as "templates". A database abstraction layer may be built using the database views or stored procedures. In the following, for the sake of simplicity, examples will be described for generating and using views. However, each example can likewise be implemented by generating stored procedures instead of views. The database abstraction layer may provide simplified access to the underlying data of the database tables such that reporting and/or analytics can be performed in a manner that reduces the complexity and the memory resources of the system, and improves the processing speed of the system. A generation template may be a code structure describing a manner in which one or more database views (or one or more SPs) are created.

In some systems, customers of the database system have the ability to define custom database tables on top of the standard database tables. In some examples, customers can extend the database tables by inserting new fields and/or new custom database tables. The flexibility of customizing the database tables may create a situation where it is difficult to deliver standard pre-configured reporting or analytics on the underlying data in the database tables, which can be used by customers out of the box without the need to also customize these reports accordingly. For instance, in order to create a database view, the system must know the names of the custom database tables, but often times the names of the customized tables are not known by the reporting/analytics tool when software is packaged and delivered to the customer, e.g. in the form of an analytical/reporting framework. Also, the system may be relatively large and complex having multiple dependent tables and database tables with complicated links. At least some of the tables or table definitions may be provided by the vendor of the framework and may be supplemented and/or structurally changed later by the operator of the database. Therefore, it may not be easy for a customer and operator of the database to implement analytical and reporting routines

However, according to the embodiments, the system can provide a simplified access layer (e.g., a database abstraction layer having one or more than one database view) to data in the database tables by deploying a reporting framework comprising some program modules configured to dynamically create views and SPs that can be called for getting a report. For example, a framework that comprises a "view generator" program or program module can dynamically define the database view as a view having a defined name, e.g. "machines" or "sales_order" without any predefined, integrated "knowledge" of the underlying database table names which can be cryptic names like DBAK, BASRP, BRK, etc. As such, the system can access the underlying data via a different object naming convention that what is used to name the database tables.

In some prior art systems, a database view is prevented from having customer information. In other words, in some prior art systems, database views are delivered to the customer which do not contain any customer-specific information. In these cases, the customer itself must extend the database view on its own to capture customer-specific information. As such, whenever a customer chooses to modify a database table, the customer must also adjust the database view. This may be a complex and error prone task as the customer typically does not know the details of the data aggregation operations that have to be performed for generating a desired report.

According to the embodiments, instead of delivering a proposed database view (or complete or near complete database view), the system according to embodiments of the invention provides one or more templates that are used to dynamically build one or more database views in order to capture any customizations applied on the database tables. The generation template may serve as a structure (or outline) on how the database view should be created. The design of the generation template allows the database view to reflect any customer information in the database tables and/or in the customer's own custom tables.

Also, the database view generation as described herein may reduce the technical complexity of the system, and, therefore, may improve the functioning of the system itself. For example, a conventional system may have to generate individual SQL statements for database tables, and then manipulate (e.g., merge, calculate, etc.) the underlying data on the application side. In one example, the conventional system may generate ten separate SQL statements to ten database tables, and then merge the results on the application side. However, according to the embodiments, the system may provide one database view (e.g., one select statement) that is a union across the ten tables implemented by one select statement from the application side, and the SQL statement is parallelized (e.g., parallelization of 10 times) to the ten individual database tables. Furthermore, generating database views using code templates may reduce maintenance efforts and costs. These and other features are further described with reference to the figures.

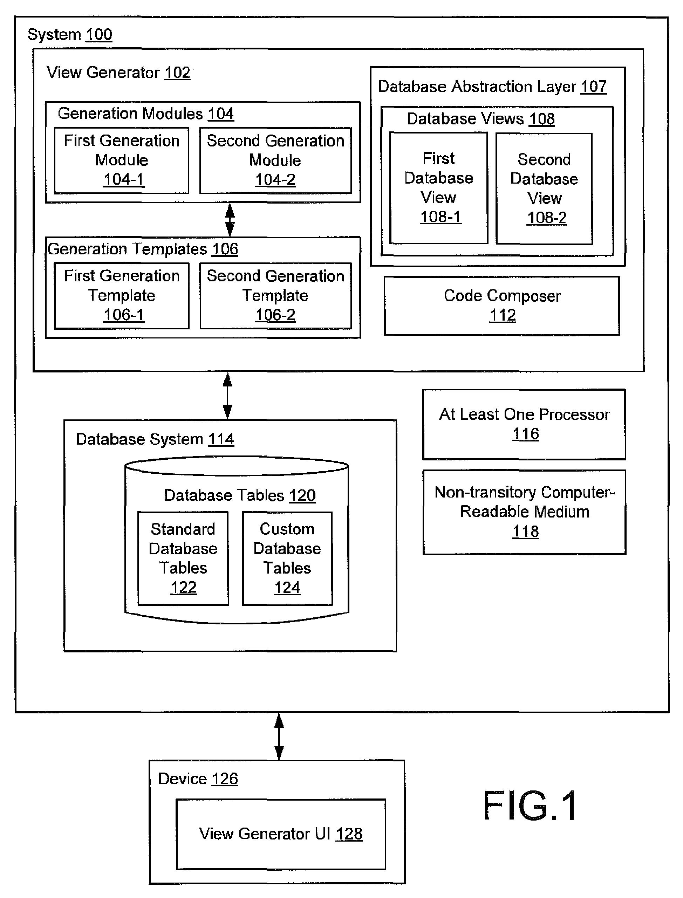

FIG. 1 illustrates a system 100 for flexible data aggregation and report generation according to an implementation. In some examples, the system 100 may be an enterprise resource planning (ERP) system having a suite of integrated applications that interfaces with a database system 114 to collect, store, manage, and interpret data from activities such as controlling one or more production lines in a manufacturing plant, product planning, manufacturing, delivery, the management of telecommunication connections and clout computing access and request statistics.

In some examples, the system 100 may include invoicing data aggregation and reporting system. In some examples, the reporting system may be considered a convergent reporting system, in that it generates a convergent report where data from various sources is aggregated into a single report or analytical result and is processed together. In general, the convergent reporting system provides the interface to other ERP systems or other forms of data processing programs and systems and is responsible for formatting the report for print. The convergent reporting system may be part of an analytical or reporting framework provided as a wrapper or supplement to the database. The reporting system can be part of a larger system such as the ERP system.

The system 100 may include a framework that comprises a program or program module referred herein as "view generator" or "generator" 102. The framework is provided and instantiated before at least some of the tables from which the data shall be aggregated or reported were defined or structurally modified and therefore the vendor of the framework may not "know" the table naming convention or table structures in advance. The framework 102 is configured to generate database views 108 for database tables 120 of the database system 114 using generation templates 106. For example, the view generator 102 may be capable of creating one or more database views 108 on one or more underlying database tables 120 using one or more generation templates 106. The view generator 102 may generate one database view 108 or multiple database views 108 during a single session when a user interacts with a GUI of the framework e.g. for creating or structurally modifying tables, for selecting the ones of the tables to be used as data source for the report and/or for selecting the ones of the templates to be transformed into the views to be used for data aggregation and report generation. The database view 108 may expose a database table 120 (or portion thereof) or multiple database tables 120 (or portions of multiple database tables 120). In some examples, the view generator 102 may automatically generate a complete database view 108 that accounts for any customization applied to the database tables 120.

In some examples, the system 100 is configured to build a database abstraction layer 107 using the database views 108. The database abstraction layer 107 may be an application programming interface which unifies an application (e.g., a big data analytics application, a reporting application for reporting the efficiency of a manufacturing process or for reporting any other kind of process or transaction, etc.) and the database tables 120. The database abstraction layer 107 may define various dependencies between the database views 108 (which are actually stored in the database managed by the database system (also referred to as database management system - DBMS) 114. The database abstraction layer 107 may be provided as part of the framework or as independent application program. The database abstraction layer may provide simplified access to the underlying data of the database tables 120 such that reporting and/or analytics can be performed in a manner that reduces the complexity and the memory resources of the system 100, and improves the processing speed of the system 100. Also, a user may interact with the generator 102 and/or the individual view generation modules 104-1, 104-2 using a graphical user interface ("GUI") 128 of the framework. Said GUI is also referred herein as "view generator user interface" (UI) 128 that is displayed on a screen of a device 126. The device 126 may be any type of client computing device capable of displaying a UI. For instance, the view generator UI 128 may have control(s) to select, control, and start generating database views 108 and/or database tables 120 as described herein. For example, a user may create some additional tables in the database system 114 via GUI 128, whereby the user selects some checkbox GUI element presented on the GUI in association with the currently created and/or modified tables. Optionally, the GUI may also present a list of templates respectively representing different types of reports for enabling a user to select one or more of the templates or report types. By selecting the tables and templates, the user can trigger the transformation of the selected templates into one or more SQL report commands by automatically inserting the names of the selected tables in the respective placeholders of the selected template(s). Optionally, the user may be enabled by the GUI to select individual table columns and one or more of the templates may comprise placeholders for table names that are filled dynamically with the user- selected column names or with the names of all columns contained in tables selected by the user.

The system 100 may be implemented with one or more application servers providing the logic for processing interactions between the users and the underlying data, one or more presentation layers (e.g., device 126) providing a graphical user interface for users to interact with various parts of the system 100 (including view generation), and one or more database servers implementing the database system 114. In some examples, the system 100 may include at least one processor 116, and a non-transitory computer-readable medium 118 storing executable instructions, that when executed by the at least one processor 116 are configured to implement the components of the system 100. The non-transitory computer-readable storage medium 118 may include one or more non-volatile memories, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The at least one processor 116 may include any type of special purpose logic circuitry, e.g., an FPGA (field programmable gate array) or an ASIC (application-specific integrated circuit). The at least one processor 116 may include one or more processors coupled to a semi-conductor substrate. Also, the system 100 may include various application programming interfaces (APIs) in a manner that permits the device 126, the database system 114, and the view generator 102 to communicate.

The database system 114 may be any type of database system capable of storing a relatively large amount of data in database tables 120. The database system 114 may be a relational database system. In some examples, the database system 114 is an in-memory database system (IMDB). An IMDB is one type of analytic database, which is a read-only system that stores historical data on metrics for business intelligence/business analytics (BI/BA) applications, typically as part of a data warehouse or data mart. These systems allow users to run queries and reports on the information contained, which is regularly updated to incorporate recent transaction data from an organization's operational systems. In addition to providing fast query response times, in-memory analytics can reduce or eliminate the need for data indexing and storing pre-aggregated data in online analytical processing (OLAP) cubes or aggregate tables. This capacity reduces costs and allows faster implementation of BI/BA applications. In contrast to other database systems, the IMDB includes one or more database engines.

The database system 114 may permit a user to customize one or more of the database tables 120. Therefore, the database system 114 may include standard database tables 122 and custom database tables 124.

A "standard" database table, also referred herein as "structurally invariable" tables, as used herein is a table whose structure is predefined in accordance with one or more data aggregation workflows specified in one or more of the templates contained in the framework. For example, the standard database tables or their structure may be defined and enforced by the provider of the framework and the templates for ensuring that a complex data analysis, aggregation and reporting task is performed efficiently and correctly. The structure of said tables is typically not allowed to be modified by the user of the database system and one or more of the templates may optionally comprise a reference to the names of one or more of the standard database table.

A "custom" database table, also referred herein as "structurally variable" table, as used herein is a table whose structure can be defined by an operator of the data management system. It is not predefined by the vendor of the framework and the templates contained in the framework are free of any reference to a "custom" table. For example, the custom database tables or their structure may be defined by an operator of the database system after the framework was provided and instantiated. The structure of said tables can freely be defined by the user of the database system. Nevertheless, such a table may comprise data that shall be included in a report. By automatically filling placeholders in a template with dynamically, at the runtime of the database system, determined names of the custom database tables, also the data contained in custom database table can be aggregated for providing a report.

The custom database tables 124 may be database tables that have been customized by one or more end users of the database system 114. For example, a custom database table 124 may be a table that has been extended by inserting or deleting a new field (e.g. a new table column) or inserting a completely new database table. The standard database tables 122 may be database tables that have not been customized by the end user (customer) of the database system 114.

The database tables 120 may store transactional data. In some examples, the transactional data may be machine parameters, machine performance indicators, temperature or pressure profiles measured at many different time points, telecommunication connections, cloud service request data, travel records, delivery parameters or data records relating to orders or financial transactions. In some examples, the database tables 120 may be considered transactional processing database tables. In some examples, the database tables 120 may be capable of storing a high amount of database records. In some examples, the database tables 120 may be capable of storing over a million records (or "database items"), whereby each record may represent e.g. a measurement result of one or more technical machine parameters at a given moment in time, a logistical transaction, a financial transaction or the like. In some examples, the database tables 120 may be capable of storing over a hundred million data records per day.

Each database view 108-1, 108-2 may include logic in the form of an SQL report command that defines a view of the underlying data contained in one or more database tables 120. In some examples, the database view 108 may be considered a customized database view in the sense that it captures information from one or more custom database tables 124. In some examples, the database view 108 is a Core Data Service (CDS) view defined using data definition language (DDL). In some examples, the database view 108 includes logic that arranges items from the database tables 120 in a specific order, by highlighting certain items, or by showing only certain items, or may include calculation logic (e.g., combining items in a certain way). In some examples, the database view 108 is one or more SELECT queries that has been given a name and saved. In some examples, the database view 108 may be considered a named query or a stored query. In some examples, the database view 108 is defined using structured query language (SQL) syntax having one more SQL statements (e.g. SELECT statements, etc.). Once stored, the database view 108 can be used again and again, rather than re-writing the same query many times. In some examples, the database view 111 may provide logic that joins two or more database tables 120 (e.g., unions or aggregations). In some examples, the database view 108 may include complex logic or calculations on the underlying data of two or more database tables 120. In some examples, the database view 108 can be used as a security mechanism in the sense that permissions can be set on the database view 108 (e.g., certain columns/rows) instead of the underlying database tables 120.

The generation templates 106 may be processed by dedicated generation modules 104, which are assigned to each generation template 106. For example, the view generator 102 may include a plurality of generation modules 104, where each different generation module 104 is assigned to process a particular generation template 106. In some examples, the number of generation modules 104 may be the same as the number of generation templates 106 to be created. For instance, when it is determined to create a particular database view 108, the view generator 102 may instantiate a generation module 104 corresponding to that particular database view 108, and this process repeats for every database view 108 to be created. In some examples, the generation modules 104 are dedicated code modules stored in a configuration database (e.g., view configuration 204) of the view generator 102.

The view generator 102 may be configured to determine which and how many database views 108 to be created. For instance, a user may define or select the type of database views 108 using the view generator UI 128. If the view generator 102 determines that there are two (or more than two) selected views (or more than two selected types of reports that respectively correspond to one or more of the templates), the view generator 102 may be configured to instantiate one generation module 104 to develop a database view 108, and then instantiate another generation module 104 to develop another database view 108, and so forth, until all the database views 108 are created. In some examples, the view generator 102 may sequentially develop the database views 108 from the generational templates 106. In other examples, the view generator 102 may instantiate multiple generation modules 104 in parallel to process multiple generation templates 106 around the same time.

The view generator 102 may instantiate a first generation module 104-1 to process a first generation template 106-1 to build a first database view 108-1, and then instantiate a second generation module 104-2 to process a second generation template 106-2 to build a second database view 108-2. The first database view 108-1 may be different than the second database view 108-2. The first generation module 104-1 may be different than the second generation module 104-2. The first generation module 104-1 may be configured to process only one type of generation template (e.g., only the first generation template 106-1). The second generation module 104-2 is configured to process only one type of generation template (e.g., only the second generation template 106-2). Although the features of the view generator 102 are explained with reference to two generation modules 104, it is understood that the view generator 102 can encompass any number of generation modules 104. For example, if the view generator 102 determines that there are five different database views 108 to be created, the view generator 102 may separately instantiate five different generation modules 104.

The generation template 106 may specify how the corresponding database view 108 is built. The first generation template 106-1 may specify how the first database view 108-1 is created, and the second generation template 106-2 may specify how the second database view 108-2 is created. In some examples, the generation template 106 includes a code structure specified in a data definition language (DDL) syntax, e.g. in the form of one or more SQL statements. In some examples, the generation template 106 includes one or more SQL statements for aggregating data from a plurality of data sources, whereby the data sources are not specified as table or column names of source database tables 120 but are rather represented by one or more placeholders, e.g. some variables like "@sourcetable1". The generation modules dynamically determine the names of the data sources (tables and columns) and replace the placeholder variables with the dynamically determined data source names, thereby generating an executable SQL report command.

In some examples, the replacement of a placeholder variable by a data source name comprises an operation of looping through a list of dynamically determined data source names and replacing a single placeholder variable by a list of multiple dynamically determined data source names: the generation template 106 includes an SQL loop statement that provides logic for including the names of multiple database tables 120 required by the corresponding database view 108 such that more detailed code can be built for each database table 120 in a loop fashion.

In some examples, the first generation template 106-1 may specify a type of union operation on multiple database tables 120, where one or more variables that operate as placeholders are replaced by the table names and name of the database view. Furthermore, the first generation template 106-1 may specify one or more loop statements, e.g. repeat-start tags and repeat and tags that cause the generation module to perform a sub-method comprising:
- dynamically identify a plurality of names (table names, column names and/or view names) of data sources comprising data that shall be aggregated upon calling the SQL report command to be created by the generation module;
- identifying an SQL expression delimited by the repeat start tag and the repeat end tag, the SQL expression comprising at least one placeholder;
- looping through the list of identified data source name and, for each of the data source names, replacing the at least one placeholder in the SQL expression with said identified data source names for generating a complete SQL expression; and
- combining all complete SQL expression for generating the SQL report command. For example, the combination can be achieved by UNION statements that may be specified in the template or that may be hard coded in and inserted into the template SQL statement by the generator module. The resulting SQL report command is configured to read data from a plurality of data sources, e.g. from all database tables 120 that comprise data to be reported upon calling the first database view 108-1. In some examples, the second generation template 106-2 may specify a different type of union operation (or an entirely different operation) on one or more database tables 120 that are different (or alternatively the same) than required by the first database view 108-1. Also, the second generation template 106-2 may specify one or more loop statements in order to process each database table 120 required by the second database view 108-2.

In some examples, the generation template 106 may include logic that provides the framework for the view without identifying particular table names of the database tables 120. In some examples, the generation template 106 includes one or more variables that represent the table name and/or view-name. In other words, the generation template 106 may include one or more variables that operate as placeholders for the table names and/or view names. In some examples, the generation template 106 may include one or more wildcard symbols that act as placeholders and that are replaced when the template is read such that the final SQL report command is build up in the view generator 102.

In some examples, when the first generation module 104-1 has been instantiated, the first generation module 104-1 may obtain the first generation template 106-1 from the database storing the generation templates 106. In other examples, the first generation module 104-1 may obtain the first generation template 106-1 from the framework comprising the first generation module. In some examples, when the second generation module 104-2 has been instantiated, the second generation module 104-2 may obtain the second generation template 106-2 from the database storing the generation templates 106. In other examples, the second generation module 104-2 may obtain the second generation template 106-2 from the framework comprising the second generation module.

After the first generation module 104-1 has obtained or otherwise derived the first generation template 106-1, the first generation module 104-1 may invoke a code composer 112 to build up the a first SQL report command to be stored as the first view 108-1 by replacing the placeholders with table names and/or table column names and optionally inserting further SQL code into the first generation template 106-1. For instance, the code composer 112 may be configured to insert one or more lines of code that reference the underlying database tables 120 (e.g., inserts the database table names) including any customer database tables 124. In some examples, the code composer 112 may generate multiple parallel SQL SELECT statements for the various database tables 120 required by the first database view 108-1 and replace one or more placeholders in the first template 106-1 with the multiple SELECT statements. In some examples, the code composer 112 may insert code into the first generation template 106-1 in a manner that replaces the variables (or wildcard symbols) in the first generation template 106-1 with actual names or values required by the SELECT statements for generating a first SQL report command. In some examples, the code composer 112 may be configured to develop the complete first SQL report command to be used as the SQL vies statement of the first database view 108-1. Then, the view generator 102 may store the first database view 108-1 in the database managed by the database management system. Alternatively, the SQL report command can be stored in the database in the form of a first stored procedure.

After the second generation module 104-2 has obtained or otherwise derived the second generation template 106-2, the second generation module 104-2 may invoke the code composer 112 to build up the second generation template 106-2 by inserting hard code, e.g. one or more SQL statements, into the second generation template 106-2. For instance, the code composer 112 may be configured to insert one or more lines of SQL code that reference the underlying database tables 120 (e.g., inserts the database table names) including any customer database tables 124 required by the second database view 108-2. In some examples, the code composer 112 may generate multiple parallel SQL SELECT statements for the various database tables 120 and use said SQL SELECT statements for replacing variables in the second generation template. The code composer 112 may insert the SQL code into the second generation template 106-2 in a manner that replaces the placeholders (e.g. variables or wildcard symbols) in the second generation template 106-2 with a complex SELECT statement and with actual table or column names or values required by the SELECT statements that have been determined dynamically at runtime of the framework and of the database management system 114. In some examples, the code composer 112 may be configured to develop a complete second SQL report command that is used as the SQL view statement of a second database view 108-2 that is stored in the database managed by the database management system. Alternatively, the SQL report command can be stored in the database in the form of a first stored procedure

A non-limiting example of a code structure of a template being specified in a data definition language (DDL) syntax and being used to create a database view 108 is illustrated below:

### Example 1: Template comprising DDL code with "speaking" placeholder names @AbapCatalog.sqlViewName: 'ZZSFLIGHT'

DEFINE VIEW zzsflight_ddl
AS SELECT * FROM sflight

As shown above, the DDL statement in the template includes a speaking placeholder name of the view (e.g., ZZSFIGHT) to be created, and a speaking placeholder name of the database table (e.g., sflight) that is assumed to comprise the data that should be returned ("reported") by the view ZZSFLIGHT' upon being called. However, as indicated above, this database table may have been subjected to customizing in which further fields (table columns) were added or deleted, for example. As the DDL statement generically reads the data from all columns of the table sflight, also the data contained in the additional table columns will be returned and reported when the view is called. In this case, the name of the table acting as data source may already be specified in the code structure of the template, but the DDL or SQL stubs use generic expressions like SELECT*FROM which ensure that the data retrieval is robust against the adding, removal and renaming of table columns.

In some examples, each generation module 104 is configured to process a corresponding generation template 106-1 for transforming said template into a corresponding SQL report command and for storing said SQL report command as a corresponding view or stored procedure in the database, thereby providing an abstraction layer 107 as the names of the generated views and stored procedures is predefined and independent of the names of the underlying data sources (tables and table columns). Thus, client applications can use the abstraction layer 107 as a generic interface for requesting data analysis reports.

Since the database tables 120 and the name of the database view 108 may be customized by the user of the system 100, the first generation module 104-1 may be configured to modify the DDL or SQL statement or placeholders of the template by replacing both the speaking placeholder table name and the speaking name of the view to be generated by one or more generic placeholder names, e.g. "$viewname$" or $tabname$", as shown below:

### Example 2: Template comprising code with generic placeholders for table and view names

First Generation Template 106-1
@AbapCatalog.sqlViewName: **$viewname$**
DEFINE VIEW **$viewname_ddl$**
AS SELECT * FROM **$tabname$**

The modifications to the standard SQL statement are shown in bold. The above first generation template 106-1 includes an SQL statement that defines the database view 108-1 for a single database datable 122. The above first generation template 106-1 uses a variable or one or more symbols (e.g., $tabname$ or $viewname$) as a placeholder for the tables name to act as data sources and the view name of the view to be created by processing and transforming the template. In other words, the template is free of any hard coded name of the database tables and table columns 120 acting as data source and is free of the name of the first database view 108-1 to be created by replacing placeholders, e.g. wildcard variables or symbols, with the real data source names.

The first generation module 104-1 may add generation information to the first generation template 106-1. "Generation information" as used herein is metadata being descriptive of parameters related to the process of dynamically generating a view or a stored procedure from a template. For example, the generation information may identify the developer having selected source tables and/or report types and corresponding templates and having thereby triggered the creation of the first database view 108-1, the time in which the first database view 108-1 is generated, or any background information regarding the view generation. An non-limiting example of the inserted generation information is shown below:

### Example 3: First Generation Template 106-1

### //generated by $username$ on $creationdate$ at $creationtime$

### @AbapCatalog.sqlViewName: $viewname$

DEFINE VIEW $viewname_ddl$
AS SELECT * FROM $tabname$

In some examples, the first generation module 104-1 may transform a template into an SQL report command that is configured to merge data contained in multiple database tables 120 into a single result set upon calling a view or stored procedure that consists of said SQL report command. For example, the automatically generated SQL report command underlying first view may perform a union on multiple different database tables 120. In some examples, the first view may be configured to merge the database tables 120 using the SQL command UNION ALL. At this point, since the system 100 may not know the total number of database tables 120, the first generation module 104-1 may use the command @repeat, in order to define a loop to be processed by the code composer 112 (e.g., the ABAP code composer) for generating an SQL report command that combines the totality of database tables that were dynamically identified by the framework. Instead of the totality of database tables present in the database at a particular moment in time, the totality of tables having a particular prefix, infix or suffix could dynamically be determined, thereby allowing a user of the DBMS 114 to freely modify table names as long as the prefix, infix or suffix convention are met. In some examples, the first generation module 104-1 may loop through a list of dynamically identified table names if there is more than one database table 120 in the database that matches a predefined criterion defined in the first generation module in respect to a particular placeholder. Said list of table names is combined into a single SQL statement using e.g. an SQL UNION or INTERSECT expression and said statement is inserted into a corresponding placeholder for generating the SQL report command of the first database view 108-1. The below example is an example of the first generation template 106-1 comprising a repeat-placeholder start and end tags ("@repeat repeat" and "@end") causing the first generator module to loop over a plurality of data sources in the table for generating a list of data source names (table names and/or table column names and/or names of database views or stored procedures) and for generating, for each of the identified data source names, an SQL expression by replacing the placeholder within an SQL stub surrounded by the repeat start and end tags with the identified data source name and by combining the such generated SQL expressions into a combined SQL expression across multiple database tables 120, e.g. by using the UNION operator. An example for the use of repeat-placeholder start and end tags is given below:

### Example 4: First Generation Template 106-1

### //generated by $username$ on $creationdate$ at $creationtime$

### @AbapCatalog.sqlViewName:$viewname$

DEFINE VIEW $viewname_ddl$
AS SELECT * FROM $tabname$
**@if $union$ @initial @optional**
**@else**
**@repeat repeat**
**UNION ALL SELECT * FROM $tabnamel$**
**@end**
**@end**

The above first generation template 106-1 defines the union of the database tables 120 using a loop in which each step in the loop adds a UNION ALL Select statement to combine a particular database table 120 with the others. The first generation module 104-1 may be configured to instantiate and configure the code composer 112 to replace the variables with actual values (e.g., actual database names) by executing the first generation template 106-1 (e.g., the loop statement of the generation template 106). In some examples, the code composer 112 is configured to introduce commands in place of the placeholders. For instance, after the code composer 112 has been called by the generation module 104, the code composer 112 may replace the $ sign by @. Thus, the first generation module 104-1 in conjunction with the code composer 112 may transform the first generation template 106-1 into a complete SQL-defined database view statement. The view generator 102, the second generation module 104-2, and the code composer 112 may operate in the same manner when creating the second database view 108-2 using the second generation template 106-2.

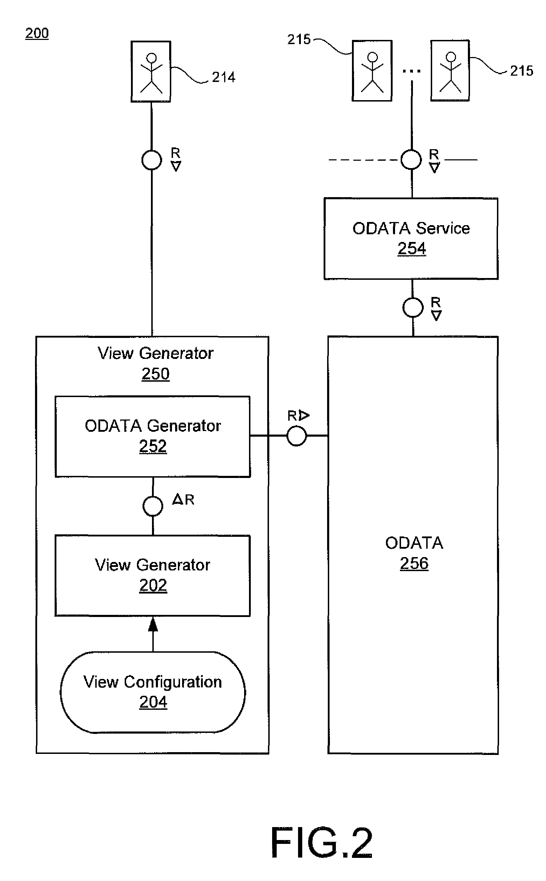

FIG. 2 illustrates a system 200 for view generation according to another implementation. The system 200 may include a view generator 250, Open Data Protocol (ODATA) 256, and ODATA service 254. In some examples, a developer or system operator 214 may directly interact with the view generator 250, and customers 215 of the underlying system may interact with the view generator 250 using the ODATA 256 and ODATA service 254 which allows the creation and consumption of APIs in order to exchange information over a network between the customers 215 and the view generator 250.

The view generator 250 may be a view generator for a particular type of service provided by an ERP system such as an invoicing service. The view generator 250 may include an ODATA generator 252, a view generator 202, and view configuration 204. In some examples, the ODATA generator 252 may include a Service Adaption Definition Language (SADL). The SADL may be a framework which enables consumption of different business object models, and other entity-based models, in particular DDIC tables and views, in a uniform way. Knowledge of the details of the modeling frameworks such as Business Object Process Framework (BOPF) or Business Object Layer (BOL) is not required. The SAPL may expose all the required information to the user interface. In some examples, the view generator 202 and the view configuration 204 may be implemented by the view generator 102 of FIG. 1.

Thus, the framework and its modules according to some implementation variants automatically create, for at least some of the automatically generated views, an ODATA service that can be used by one or more client applications to request the generation of the report without using the standard SQL interface of the database. This may increase the security of the data because the operator of the DBMS may merely have to communicate the ODATA service interface details to the client applications and hide any authorization data that would enable the client applications to access the data tables via the SQL interface of the database from the client applications.

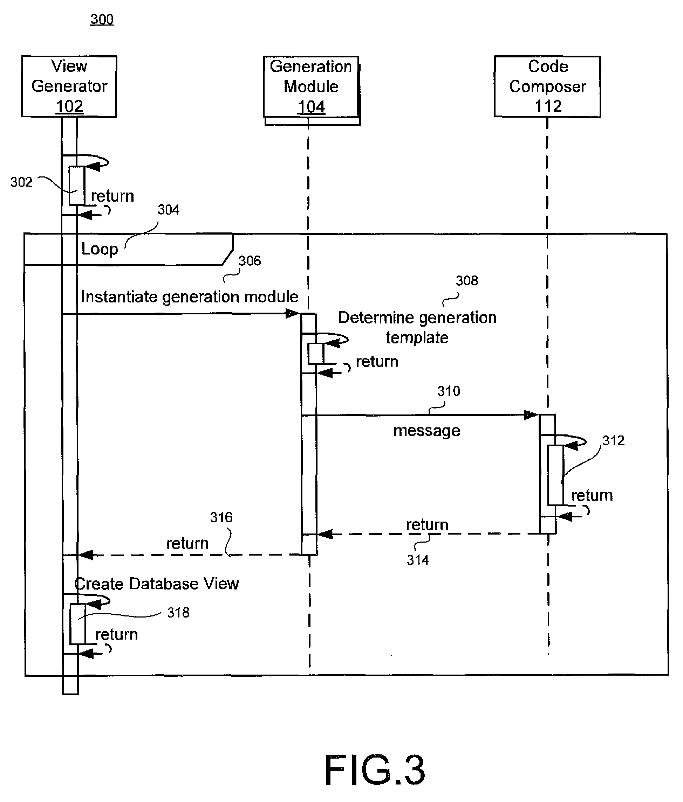

FIG. 3 illustrates a sequence diagram 300 depicting view generation operations performed by the system 100 of FIG. 1 and/or the system 200 of FIG. 2 according to an implementation. In 302, the view generator 314 may determine the database views 108 to be created. The view generator 102 may determine that one database view 108 is to be created. In other examples, the view generator 102 may determine that multiple database views 108 are to be generated. In some examples, in 304, the view generator 102 may create the database views 108 in a loop by sequentially creating each database view 108. For example, in 306, the view generator 102 may create the first database view 108-1 by instantiating the first generation module 104-1 which creates the final SQL report command (e.g., DDL-source based statement) for the first database view 108-1. Then, after the first database view 108-1 is completed, the view generator 102 may instantiate the second generation module 104-2 to create the second database view 108-2. Then, the view generator 102 may repeat this process (e.g., third, fourth generation module, etc.) until all database views 108 that have automatically, semi-automatically or manually been scheduled creation for generating a report have been created.

In 308, the first generation module 104-1 may determine the first generation template 106-1 and transform an SQL code stub contained therein into a first SQL report command used and stored as the first database view 108. In some examples, the first generation module 104-1 may obtain the first generation template 106-1 from a database storing the generation templates 106. Then, in 310, the first generation module 104-1 may message or instantiate the code composer 112. In 312, the code composer 112 is configured to introduce code into the first generation template 106-1 in order to transform the first generation template 106-1 into an SQL statement referencing the custom database tables 124. In 314, the code composer 112 may return the SQL statement to the generation module 104. In 316, the generation module 104 may return the SQL statement to the view generator 102. In 318, the view generator 102 may create the database view 108 based on the SQL statement.

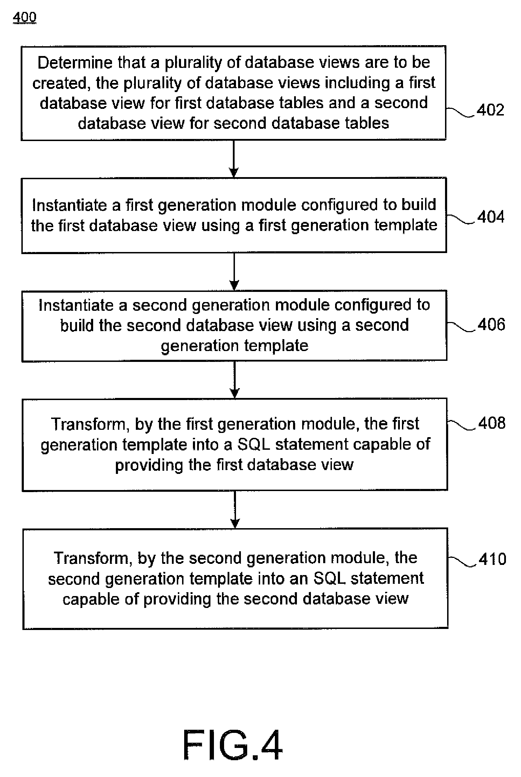

FIG. 4 illustrates a flowchart 400 depicting example operations of the system 100 of FIG. 1 and/or the system 200 of FIG. 2. Although FIG. 4 is illustrated as a sequential, ordered listing of operations, it will be appreciated that some or all of the operations may occur in a different order, or in parallel, or iteratively, or may overlap in time.

A plurality of database views to be created may be determined, where the plurality of database views includes a first database view for first database tables and a second database view for second database tables (402). For example, the view generator 102 may be configured to determine a plurality of database views 108, where the plurality of database views 108 include the first database view 108-1 and the second database view 108-2. The view generator 102 may be configured to determine which and how many database views 108 to be created. For instance, a user may define or select the type of database views 108 using the view generator UI 128.

A first generation module may be instantiated, where the first generation module is configured to build the first database view using a first generation template (404). For example, the view generator 102 may be configured to instantiate the first generation module 104-1 to build the first database view 108-1 using the first generation template 106-1.

A second generation module may be instantiated, where the second generation module is configured to build the second database view using a second generation template (406). For example, the view generator 102 may be configured to instantiate the second generation module 104-2 to build the second database view 108-2 using the first generation template 106-2.

The first generation template may be transformed into a structure query language (SQL) statement capable of providing the first database view (408). For instance, the first generation module 104-1 in conjunction with the code composer 112 is configured to transform the first generation template 106-1 into a SQL statement capable of providing the first database view 108-1.

After the first generation module 104-1 has obtained or otherwise derived the first generation template 106-1, the first generation module 104-1 may invoke the code composer 112 to build up the first generation template 106-1 by inserting hard code, e.g. SQL code into the first generation template 106-1. For instance, the code composer 112 may be configured to insert one or more lines of code that reference the underlying database tables 120 (e.g., inserts the database table names) including any customer database tables 124. In some examples, the code composer 112 may generate multiple parallel SQL SELECT statements for the various database tables 120 required by the first database view 108-1. In some examples, the code composer 112 may insert code into the first generation template 106-1 in a manner that replaces the variables (or wildcard symbols) in the first generation template 106-1 with actual names or values required by the SELECT statements. In some examples, the code composer 112 may be configured to develop a complete SQL statement for the first database view 108-1. Then, the view generator 102 may generate the first database view 108-1 using the complete SQL statement.

The second generation template may be transformed into an SQL statement capable of providing the second database view (410). For instance, the second generation module 104-2 in conjunction with the code composer 112 is configured to transform the second generation template 106-2 into a SQL statement capable of providing the second database view 108-2.

After the second generation module 104-2 has obtained or otherwise derived the second generation template 106-2, the second generation module 104-2 may invoke the code composer 112 to build up the second generation template 106-2 by inserting SQL code into the second generation template 106-2. For instance, the code composer 112 may be configured to insert one or more lines of code that reference the underlying database tables 120 (e.g., inserts the database table names) including any customer database tables 124 required by the second database view 108-2. In some examples, the code composer 112 may generate multiple parallel SQL SELECT statements for the various database tables 120 required by the second database view 108-2. In some examples, the code composer 112 may insert code into the second generation template 106-2 in a manner that replaces the placeholders (e.g. variables or wildcard symbols) in the second generation template 106-2 with actual names or values required by the SELECT statements. In some examples, the code composer 112 may be configured to develop a complete SQL statement for the second database view 108-2. Then, the view generator 102 may generate the second database view 108-2 using the complete SQL statement.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program having the non-transitory computer readable medium, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. The programmable processors may be coupled to one or more semiconductor substrates. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

## Claims

1. A computer-implemented method for aggregating data stored in a database for generating a report, the method comprising:
- providing a framework for the database, the framework being program logic implementing a generator (102) configured for creating one or more SQL report commands, the framework comprising one or more templates (106), each template being a code structure describing a manner in which one or more of the SQL report commands are to be created, the code structure comprising table name placeholders and being free of any reference to the name of at least one of one or more database tables comprising data to be aggregated by the report;
- determining, by the framework, that the report is to be created for the one or more tables including the at least one table;
- in response to the determination, identifying, by the framework, the name of the at least one table for which the report is to be created;
- selecting, by the framework, one or more of the templates;
- transforming, by the framework, the one or more selected templates into one or more of the SQL report commands by parsing the selected templates and filling the place holders of the selected templates with the identified table names; and
- storing, by the framework, said one or more SQL report commands in the form of a database view or stored procedure in the database;
- receiving, by a DBMS maintaining the database, a call of the view or the stored procedure; and
- in response to receiving the call, executing the SQL report command stored as the called view or called stored procedure for generating the report.

2. The method of claim 1,
- the one or more templates comprising a first template and a second template,
- the generation module comprising a first generator module (104-1) configured to selectively transform the first template into one or more first ones of the SQL report commands and a second generator module (104-2) configured to selectively transform the second template into one or more second ones of the SQL report commands; wherein preferentially the first generator module is configured to selectively transform each of a plurality of first templates into one or more SQL report commands of a first type, the second generator module being configured to selectively transform each of a plurality of second templates respectively into one or more SQL commands of a second type, the first and second type SQL report commands differing from each other.

3. The method of any one of the previous claims, further comprising:
- after the framework and the templates were provided, storing and/or structurally modifying one or more of the tables comprising data to be aggregated by the report, the selected templates being free of a reference to the name and/or structural modification of the one or more tables, the identification of the names of the one or more tables for which the report is to be created being performed in response to the storing or structurally modification of the at least one table.

4. The method of anyone of the previous claims, the selection of the one or more templates comprising:
- receiving, by the framework, a user's selection of the one or more templates via a GUI of the framework; or
- receiving, by the framework, a request for the report, the request comprising an indication of the type of report to be generated; and automatically evaluating, by the framework, a report type-ID stored in association with each of the templates; and selecting the ones of the templates having assigned a report type-ID that corresponds to the type of the report indicated in the request; or
- evaluating, by the framework, a configuration file or environmental parameters or a user's selection via a GUI for dynamically identifying the type of report to be generated and for selecting the ones of the templates having assigned a report type-ID that corresponds to the type of the report to be generated.

5. The method of anyone of the previous claims, the framework being program logic configured for providing a user interface for enabling a user:
- to specify table names and column names and for specifying the structure of tables to be created in the database; and
- to select the ones of said tables whose data is to be aggregated in the report or in any other type of report supported by the framework.

6. The method of anyone of the previous claims, further comprising:
- at design time of the framework, supplementing the framework with the templates, the plurality of templates comprising the one or more selected templates, the templates being code structures describing the creation of SQL report commands of different report types.

7. The method of anyone of at least one of the selected templates being configured for causing the generator to create a tree-based hierarchy of SQL report commands in the form of a tree-based hierarchy of views or in the form of a tree-based hierarchy of stored procedures, each view or stored procedure representing a node of the tree, each of the nodes representing a respective report, wherein upon calling any one of the nodes, the called node calls all its direct child nodes until the leaf nodes of the trees being direct or indirect child nodes of the initially called node have been called, thereby generating a report that aggregates data provided by and aggregated over all the called nodes being a direct or indirect child node of the initially called node.

8. The method of claim 7, each node of the hierarchy of nodes being configured to return, upon being called by a client application, a respective report that aggregates data provided by all direct or indirect child nodes of said called node to the client application.

9. The method of claim 7 or 8, the creation of the tree-based hierarchy of nodes comprising:
a) replacing placeholders in a first portion of one of the templates by the identified table names for creating one or more first ones of the nodes of the hierarchy, the first nodes being part of a first level of the hierarchy, the first level being the lowest level of the hierarchy and comprising the leaf nodes;
b)replacing placeholders in a second portion of one of the templates by the names of one or more of the created first nodes, the names of the created first nodes being view names or stored procedure names, for creating one or more second ones of the nodes of the hierarchy constituting a second level of the hierarchy;
- repeating step b) for one or more further portions of the template, if any, thereby respectively replacing placeholders by the names of the nodes of a hierarchy having been generated in a previous iteration of step b), until the root node of the hierarchical tree is generated, wherein the names of one or more of the nodes of the second and any higher level of the hierarchy are hard coded in the template or in the program logic of the generator.

10. The method of any one of the previous claims 6-9, the one or more selected templates comprising at least one template whose code structure specifies the aggregation of data stored in a plurality of database tables whose table name prefixes, infixes and/or suffixes follow a predefined pattern,
- the selection of said template by the framework comprising determining that the prefixes, infixes and/or suffixes of the one or more tables for which the report is to be created match the predefined pattern in the code structure of the at least one template and selecting the determined template for performing the transformation;
- the transformation of the selected template into the one or more SQL report commands comprising generating an SQL report command that aggregates data stored in the plurality of database tables whose table name prefixes, infixes and/or suffixes follow the predefined pattern, the SQL report command comprising the full names of the tables instead of the placeholders, whereby the prefixes, infixes and/or suffixes are used for identifying the placeholders that are to be filled with the full names of the tables.

11. The method of anyone of the previous claims, the database being maintained by a first DBMS of a first DBMS type, the templates of the framework implementing a plurality of different data aggregation operations and being configured to be transformed into SQL report commands that can be performed by the first DBMS type more efficiently than by a second DBMS type, the method further comprising:
- providing a further framework for a second database maintained by a second DBMS having a second DBMS type, the further framework being program logic implementing the same generator as the framework, the further framework comprising one or more further templates, each further template being a code structure describing a manner in which one or more further SQL report commands are to be created, wherein the further SQL report commands can be performed by the second DBMS type more efficiently than by the first DBMS type for enabling the second DBMS to generate a report by calling a view or stored procedure created by the second framework.

12. The method of any one of the previous claims, the selected template comprising a repeat-start tag and a repeat-end tag, the repeat start tag and repeat-end tag delimiting an SQL expression with at least one placeholder, the generator being configured to perform, upon transforming the template, a sub-method comprising:
- dynamically identifying a plurality of names of data sources comprising data that shall be aggregated upon calling the SQL report command to be created by transforming the generation module;
- identifying an SQL expression delimited by the repeat start tag and the repeat end tag, the SQL expression comprising the at least one placeholder;
- looping through the list of identified data source names and, for each of the data source names, replacing the at least one placeholder in the SQL expression with said identified data source names for generating a complete SQL expression; and
- combining all complete SQL expressions for generating the SQL report command.

13. A non-transitory computer-readable medium storing executable instructions that when executed by a processor cause the processor to perform a method according to any one of the previous claims.

14. A data processing system for generating a report, the system comprising:
- a framework, the framework being program logic implementing a generator configured for creating one or more SQL report commands, the framework comprising one or more templates (106), each template being a code structure describing a manner in which one or more of the SQL report commands are to be created, the code structure comprising table name placeholders and being free of any reference to the name of at least one of one or more database tables comprising data to be aggregated by the report;
- a DBMS for maintaining a database comprising the one or more tables including the at least one table;
the framework being configured for:
o determining that the report is to be created for the one or more tables including the at least one table;
o in response to the determination, identifying, by the framework, the name of the at least one table for which the report is to be created;
o selecting one or more of the templates;
o transforming the one or more selected templates into one or more of the SQL report commands by parsing the selected templates and filling the place holders of the selected templates with the identified table names; and
o storing the one or more SQL report commands in the form of a database view or stored procedure in the database;
o receiving a call of the view or the stored procedure; and
o in response to receiving the call, executing the SQL report command stored as the called view or called stored procedure for generating the report.

15. The system of claim 14, further comprising an interface for storing and/or structurally modifying at least one of the one or more tables which comprise data to be aggregated by the report, the storing and/or structural modification to be performed after the framework and the templates were instantiated and started to interoperate with the database.

16. The system of claim 14 or 15, the framework comprising a plurality of generator modules, the different generator modules being configured for transforming one or more selected ones of the templates into SQL report commands of different report types, the framework comprising a mapping that assigns the templates to the generator modules in accordance with an n:m relationship, the assignment ensuring that each generator module selectively parses the ones of the templates whose code structure can be parsed and interpreted by the assigned module for generating an SQL report command.
